# EUROPÄISCHE PATENTANMELDUNG

(11) **EP 2 441 618 A2**
(43) Veröffentlichungstag der Anmeldung: **18.04.2012**
(21) Anmeldenummer: 11466029.3
(22) Anmeldetag: 13.10.2011
(51) Int. Cl.: B60N 3/10

(54) **Klappbarer Flaschenhalter**

(30) Priorität: 18.10.2010 CZ 20100757
(71) Anmelder: Skoda Auto A.S., 293 60 Mladá Boleslav (CZ)
(72) Erfinder: Netusil, Karel, Mladá Boleslav (CZ); Dolák, Roman, 29301 Mladá Boleslav (CZ); Svábek, Karel, 46812 Jablonec nad Niso (CZ)

(57) **Zusammenfassung**

Der klappbare Halter (1) einer Flasche (6) ist im Fahrzeuginnenraum vor dem Vordersitz im Fußraum der Insassen angeordnet und an der Mittelkonsole (8) des Fahrzeuges befestigt. Der klappbare Halter (1) dient zur Aufnahme einer Trinkflasche oder beliebigen Gefäßes für den Bedarf der Fahrzeuginsassen. Die Erfindung liegt darin, dass der Halter (1) der Flasche (6) durch einen an der Mittelkonsole (8) des Fahrzeuges eingesetzten und befestigten Rahmen (2) und einen mit dem Rahmen (2) über eine schwenkbare Befestigung mit einer Welle (4) des Rahmens (2) verbundenen taschenförmigen Deckel (3) gebildet wird. Der taschenförmige Deckel (3) wird durch eine klappbare bogenartige Wand (5), die für das Einsetzen und Halten der Flasche (6) im klappbaren Halter (1) in der aufgeklappten Position ausgestaltet ist, und eine hintere Stützwand (7), an der sich der Boden der Flasche (6) abstützt, gebildet. Nach der Entnahme der Flasche (6) aus dem klappbaren Halter (1)ist der taschenförmige Deckel (3) in der geschlossenen Stellung im Rahmen (2) des klappbaren Halters (1) angeordnet.

## Beschreibung

### Technisches Gebiet

Die Erfindung betrifft einen klappbaren Flaschenhalter, der im Fahrgastraum im Fußbereich des Beifahrers angeordnet und an der Mittelkonsole des Fahrzeuges befestigt ist, wobei der Flaschenhalter zur Aufbewahrung von Trinkflaschen oder beliebigen Gefäße für den Bedarf der Fahrzeuginsassen dient.

### Bisheriger Stand der Technik

Für die Befestigung verschiedener Flaschen und flaschenförmiger Gefäße im Fahrer- und Beifahrerbereich werden geläufig verschiedene Halterungen und komplizierte Befestigungssysteme verwendet. Diese Halterungen sind in überwiegender Mehrheit an der Schalttafel oder am Mitteltunnel zwischen dem Fahrer und dem Beifahrer angeordnet.

Im Dokument DE10223404A1 ist eine Haltevorrichtung für die Befestigung eines Trinkgefäßes im Fahrgastraum zwischen dem Fahrer- und Beifahrersitz angeführt, das beliebig am Mitteltunnel im Abschnitt zwischen der Schalttafel und den Fondsitzen befestigt werden kann. Zum Mitteltunnel ist in diesem Abschnitt ein Verbindungsteil befestigt, auf dem senkrecht zur Vertikale der Flaschenhalter frei aufgesetzt ist. Dieser Verbindungsteil kann auch zur Vorderseite des Fahrer- sowie Beifahrersitzrahmens im Fußbereich befestigt werden. Der Verbindungsteil umfasst eine ringförmige Aufnahme. Der Flaschenhalter umfasst einen Haltearm, auf dem ein ausfahrbarer Bolzen befestigt ist. Die eigentliche Verbindung des Flaschenhalters mit dem Verbindungsteil ist derart ausgeführt, dass der ausfahrbare Bolzen des Flaschenhalters in die ringförmige Aufnahme des Verbindungsteils eingesteckt wird.

Die Halterungen verschiedener Trinkgefäße werden auch an die Mittelkonsole, im ihren unteren Abschnitt, im Fußraum der Fahrzeuginsassen angeordnet. Solche Anordnung einer Halterung ist im DE102004005053 angeführt. In diesem Dokument ist eine Lösung der Halterung zum lösbaren Halten insbesondere dann der Flaschen im Fahrzeuginnenraum beschrieben, die an der Mittelkonsole befestigt ist. Die Halterung umfasst einen Halteteil, welcher die Flasche im Halsbereich hält und die Form eines Hakens oder einer Backe hat. Im Bodenbereich wird die Flasche mit einer Stützeinheit gehalten, die an der Mittelkonsole als ein verschiebbarer Deckel ausgestaltet ist, welcher die Flasche unterstützt und fixiert.

Im Dokument DE102007006898 ist eine Haltevorrichtung zur Aufnahme und Kühlung von Getränkebehältern in einem Kraftfahrzeug beschrieben, die ein an flexibler Wandung angebrachtes Gehäuse umfasst, welches einen Raum zur Aufnahme dieses Gefäßes aufweist und eine Kühleinrichtung einschl. einer Einrichtung für die Übertragung der Kälte von der Kühleinrichtung auf den Getränkebehälter umfasst. Diese flexible Wandung ist an der Verkleidung der Mittelkonsole im Beifahrerfußraum im Fahrzeug angeordnet.

Der Nachteil solcher Lösungen liegt darin, dass beim Nichtgebrauch der Halterung diese ständig in den Fußraum der Insassen herausragt und so den Raum für Beifahrer einschränkt oder sogar einen Schaden an der Kleidung oder eine Verletzung verursachen kann.

### Darstellung der Erfindung

Die Aufgabe wird mit einem klappbaren Flaschenhalter gelöst, der im Fahrzeuginnenraum vor dem Vordersitz im Fußraum der Insassen angeordnet und an der Mittelkonsole des Fahrzeuges befestigt ist. Dieser klappbarer Flaschenhalter dient zur Aufnahme eines dem Bedarf der Fahrzeuginsassen dienenden Gefäßes. Die Darstellung der Erfindung liegt darin, dass der Flaschenhalter durch einen Rahmen gebildet wird, der an der Mittelkonsole des Fahrzeuges eingesetzt und befestigt ist. Der Rahmen weist im seinen unteren Bereich eine Welle auf. Der Flaschenhalter umfasst weiter einen taschenförmigen Deckel, der mit dem Rahmen über eine schwenkbare Befestigung mit der Welle des Rahmens verbunden ist. Der taschenförmige Deckel wird durch eine klappbare, bogenartige Wand gebildet, die für das Einsetzen und Halten der Flasche im klappbaren Halter in der aufgeklappten Position gebildet und ausgestaltet ist. Der taschenförmige Deckel umfasst weiter eine hintere Stützwand, an der sich der Flaschenboden abstützt. Nach der Entnahme der Flasche aus dem klappbaren Halter wird der taschenförmige Deckel zum Rahmen des klappbaren Halters zugeklappt und so befindet sich der taschenförmige Deckel in der geschlossenen Position.

Auf der Welle des Rahmens ist eine Druckfeder befestigt, die zwei verlängerte Schenkel aufweist. Der erste Schenkel der Feder ist in der Aussparung des Rahmens befestigt und stützt sich an dem Halterrahmen ab und der zweite Schenkel ist in dem Einschnitt befestigt, der im taschenförmigen Deckel ausgebildet ist. Durch die Vorspannung der Druckfeder wird der taschenförmige Deckel zum Rahmen gedrückt.

Der taschenförmige Deckel kann auch eine Sperrlasche umfassen. Der Rahmen weist in diesem Fall eine Raste auf. Die Sperrlasche und die Raste sind so ausgebildet, dass die Sperrlasche der hinteren Stützwand des Deckels genau in die Raste des Rahmens eingreift und so den taschenförmigen, zum Rahmen zugeklappten Deckel in der geschlossenen Stellung sichert und hält. Der taschenförmige Deckel weist im Verbindungsbereich mit dem Rahmen eine Aufsetzkante auf, die in der offenen Stellung des taschenförmigen Deckels auf den Rahmen des klappbaren Halters aufsetzt und sich an ihm anlehnt.

Im Gegensatz zum oben genannten Stand der Technik schränkt der vorliegende klappbare Halter in der zugeklappten geschlossenen Stellung des Deckels den Beifahrerfußraum nicht ein.

### Übersicht der Figuren der Zeichnungen

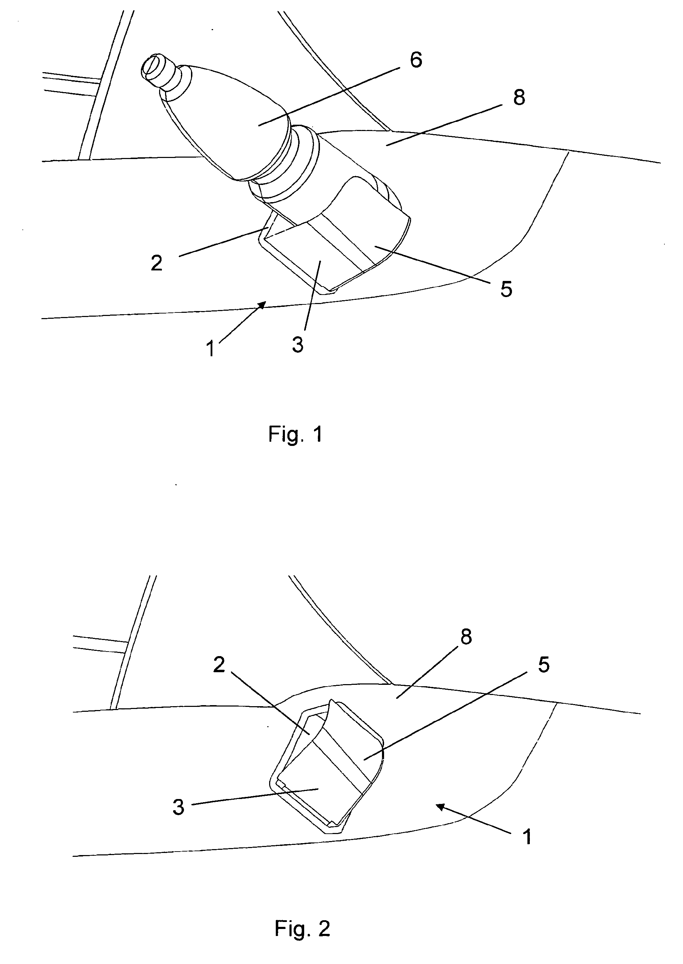

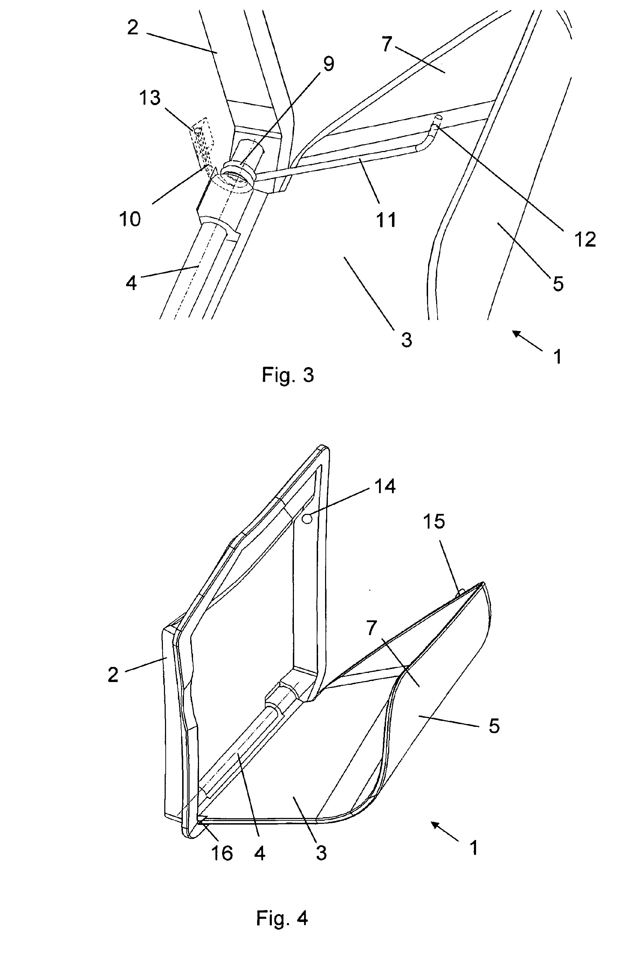

In der Fig. 1 ist die Anordnung des erfindungsgemäßen Halters und der Flasche in einer perspektivischen Gesamtansicht des Beifahrerfußraumes, in Fig. 2 die gleiche Anordnung des Halters jedoch ohne der Flasche, in Fig. 3 in einer perspektivischen Ansicht das Detail des Halters in der Ausführung mit einer Feder und in Fig. 4 in perspektivischer Ansicht der Halter in der Ausführung mit Sperrelementen dargestellt.

### Ausführungsbeispiel der Erfindung

In der Fig. 1 ist der Raum vor dem Beifahrersitz abgebildet, wo die Mittelkonsole 8 des Fahrzeuges angeordnet ist. An dieser Stelle ist in diese Mittelkonsole 8 ein klappbarer Halter 1 eingesetzt und befestigt, in den eine Flasche 6 eingelegt werden kann. Dieser klappbarer Flaschenhalter 1 dient zur Aufnahme eines Trinkgefäßes für den Bedarf der Fahrzeuginsassen. Der klappbarer Halter 1 der Flasche 6 umfasst einen Rahmen 2 und einen taschenförmigen Deckel 3. Der Rahmen 2 ist in der Mittelkonsole 8 des Fahrzeuges eingesetzt und zu dieser befestigt. Im unteren Bereich des Rahmens 2 ist eine Welle 4 angeordnet. Weiterer Bestandteil des Halters 1 der Flasche 6 ist der taschenförmige Deckel 3, der schwenkbar zu der Welle 4 des Rahmens 2 befestigt ist. Der taschenförmige Deckel 3 umfasst eine klappbare, bogenartige Wand 5 und hintere Stützwand 7. Die klappbare Wand 5, hat einen offenen oberen Abschnitt des Halters, d.h. die klappbare Wand 5 ist mit dem bogenartigen Profil für das Einsetzen und Halten der Flasche im klappbaren Halter 1 in der aufgeklappten Position gebildet und ausgestaltet ist. An die hintere Stützwand 7 des taschenförmigen Deckels 3 lehnt sich der Flaschenboden 6 an. Nach der Entnahme der Flasche 6 aus dem klappbaren Halter 1, gemäß Fig. 2, klappt der taschenförmige Deckel 3 zum Rahmen 2 des klappbaren Halters 1 zu und der taschenförmige Deckel 3 befindet sich somit in der geschlossenen Stellung.

Ein Ausführungsbeispiel für die geschlossene Stellung des klappbaren Halters 1 der Flasche 6, gemäß Fig. 3, ist die Ausführung mit einer Druckfeder 9. Auf der Welle 4 des Rahmens 2 ist eine Druckfeder 9 befestigt, die zwei verlängerte Schenkel aufweist. Der erste Schenkel 10 der Feder 9 ist in der Aussparung 13 des Rahmens befestigt und lehnt sich an diesen Rahmen 2 des klappbaren Halters 1 an. Der zweite Schenkel 11 ist in dem Einschnitt 12 befestigt, der im taschenförmigen Deckel 3 des klappbaren Halters 1 ausgebildet ist. Durch die Vorspannung der Druckfeder 9 wird der taschenförmige Deckel 3 zum Rahmen 2 gedrückt. Vorteilhaft kann die Druckfeder 9 an jedem Ende der im Rahmen 2 gelagerten Welle 4 angeordnet werden.

Nach dem Einsetzen der Flasche 6 in den klappbaren Halter 1 ist dieser Halter 1 in der offenen Stellung und unter dem Einfluss der Vorspannung der Druckfeder 9 drückt der taschenförmige Deckel 3 auf die Flasche 6. Dadurch wird die unerwünschte Bewegung der Flasche 6 im klappbaren Halter 1 vermieden, die durch die Schwingungen während der Fahrt entstehen kann. Nach der Entnahme der Flasche 6 aus dem klappbaren Halter 1 wird durch die Vorspannung der Druckfeder 9 der taschenförmige Deckel 3 zum Rahmen 2 des klappbaren Halters 1 zugeklappt und der taschenförmige Deckel 3 befindet sich somit in der geschlossenen Stellung.

Ein weiteres Ausführungsbeispiel, gemäß Fig. 3, stellt die billigere Ausführung mit einer Sperrlasche 15 und mit korrespondierender Raste 14 dar. Diese Lösung ist so ausgeführt, dass die hintere Stützwand 7 des taschenförmigen Deckels 3 eine Sperrlasche 15 und der Rahmen 2 eine Raste 14 aufweist. Die Sperrlasche 15 und die Raste 14 sind so ausgebildet, dass die Sperrlasche 15 der hinteren Stützwand 7 des taschenförmigen Deckels 3 genau in die Raste 14 des Rahmens 2 eingreift. Somit wird der zum Rahmen 2 zugeklappte taschenförmige Deckel 3 in der geschlossenen Position gesichert und gehalten. Der taschenförmige Deckel 3 weist im Verbindungsbereich mit dem Rahmen 2 eine Aufsetzkante 16 auf, die in der offenen Stellung des taschenförmigen Deckels 3 auf den Rahmen 2 des klappbaren Halters 1 aufsetzt und sich an ihm anlehnt. Die Spreizbreite des Halters 1 in offener Stellung ist optimiert und dem Durchmesser der einzusetzenden Flasche angepasst.

Vorteilhaft können bei dieser Ausführung mehrere am Umlauf des taschenförmigen Deckels 3 beliebig angeordnete Sperrlaschen 15 und dazu an korrespondierenden Stellen die entsprechende Anzahl der Rasten 14 eingesetzt werden.

Der klappbare Halter 1 in der zugeklappten geschlossenen Stellung des taschenförmigen Deckels 3 ist derart ausgestaltet, dass der den Beifahrerfußraum nicht einschränkt.

Der klappbare Flaschenhalter kann aus Kunststoff ausgebildet sein und die Flasche entspricht einer handelsüblichen PET-Flasche für Getränke, wie diese standardmäßig für verschiedene Getränke wie Limonaden, Mineralwasser usw. in verschiedenen Volumengrößen (0,5l; 1l; 1,5l; 2l usw.) verwendet wird.

### Gewerbliche Anwendbarkeit

Der erfindungsgemäße klappbare Flaschenhalter kann in allen Automobilen eingesetzt werden und vorteilhaft beispielsweise im Fahrgastraum vor dem Vordersitz und vorderen Abschnitt des Mitteltunnels im Fußbereich des Beifahrers angeordnet und an der Mittelkonsole des Fahrzeuges befestigt werden.

### Verwendete Bezeichnungen

- 1: klappbarer Flaschenhalter
- 2: Rahmen des Halters
- 3: taschenförmiger Deckel des Halters
- 4: Welle des Rahmens
- 5: klappbare Wand des taschenförmigen Deckels
- 6: Flasche
- 7: hintere Stützwand des taschenförmigen Deckels
- 8: Mittelkonsole des Fahrzeuges
- 9: Druckfeder
- 10: erster Federschenkel
- 11: zweiter Federschenkel
- 12: Einschnitt im taschenförmigen Deckel
- 13: Aussparung im Rahmen
- 14: Raste im Rahmen
- 15: Sperrlasche der hinteren Stützwand
- 16: Aufsetzkante des taschenförmigen Deckels

## Patentansprüche

1. Ein im Fahrgastraum vor dem Vordersitz im Fußraum der Insassen angeordneter und an der Mittelkonsole (8) des Fahrzeuges befestigter klappbarer Halter (1) einer Flasche (6), wobei der klappbare Halter (1) der Flasche (6) zur Aufbewahrung von Trinkflaschen oder beliebigen Gefäße für den Bedarf der Fahrzeuginsassen dient, **dadurch gekennzeichnet, dass**
- der Halter (1) der Flasche (6) umfasst
einen an der Mittelkonsole (8) des Fahrzeuges eingesetzten und befestigten Rahmen (2), der in seinem unteren Abschnitt eine gelagerte Welle (4) aufweist,
sowie einen mit dem Rahmen (2) über eine schwenkbare Befestigung mit der Welle (4) verbundenen taschenförmigen Deckel (3), der durch eine bogenartige klappbare Wand (5), die für das Einsetzen und Halten der Flasche (6) im klappbaren Halter (1) in der aufgeklappten Position ausgestaltet ist und eine hintere Stützwand (7), an der sich der Boden der Flasche (6) abstützt, gebildet wird,
wobei nach der Entnahme der Flasche (6) aus dem klappbaren Halter (1) der taschenförmige Deckel (3) in der geschlossenen Stellung im Rahmen (2) des klappbaren Halters (1) angeordnet ist.

2. Ein klappbarer Halter (1) nach Anspruch 1 **dadurch gekennzeichnet, dass** an der Welle (4) mindestens eine Druckfeder (9) angeordnet ist, die einen ersten Schenkel (10) und einen zweiten Schenkel (11) aufweist, wobei der erste Schenkel (10) an die Aussparung (13) im Rahmens (2) des Halters (1) anlehnt und der zweite Schenkel (11) in den Einschnitt (12) eingreift, der an dem taschenförmigen Deckel (3) ausgebildet ist, wobei durch die Vorspannung der Feder (9) der taschenförmige Deckel (3) zum Rahmen (2) gedrückt wird.

3. Ein klappbarer Halter (1) nach Anspruch 1 **dadurch gekennzeichnet, dass** der taschenförmige Deckel (3) mindestens eine Sperrlasche (15) und der Rahmen (2) mindestens eine Raste (14) aufweist, wobei die Sperrlasche (15) und die Raste (14) für genaues Einrasten der Sperrlasche (15) in die Raste (14) ausgestaltet sind, wodurch das Halten des taschenförmigen Deckels (3) am Rahmen (2) in geschlossener Stellung gesichert wird.

4. Ein klappbarer Halter (1) nach Ansprüchen 1 und 3 **dadurch gekennzeichnet, dass** der taschenförmige Deckel (3) des klappbaren Halters (1) im Verbindungsbereich mit dem Rahmen (2) mindestens eine Aufsetzkante (16) aufweist, die in der offenen Stellung des taschenförmigen Deckels (3) an den Rahmen (2) anlehnt.
